# FASCICULE DE BREVET EUROPEEN

(11) **EP 3 959 134 B1**
(45) Date de publication et mention de la délivrance du brevet: **01.11.2023**
(21) Numéro de dépôt: 20718354.2
(22) Date de dépôt: 20.04.2020
(51) Int. Cl.: B64D 33/02, F02C 7/045

(54) **ENTRÉE D'AIR DE NACELLE À PANNEAU ACOUSTIQUE**
LUFTEINLASS EINER GONDEL MIT AKUSTIKPLATTE
NACELLE AIR INTAKE WITH ACOUSTIC PANEL

(30) Priorité: 26.04.2019 FR 1904428
(43) Date de publication de la demande: 02.03.2022
(73) Titulaire: Safran Nacelles, 76700 Gonfreville l'Orcher (FR)
(72) Inventeur: CARUEL, Pierre, 77550 MOISSY CRAMAYEL (FR); DESJOYEAUX, Bertrand, 77550 MOISSY CRAMAYEL (FR); LEROYER, Bertrand, 77550 MOISSY CRAMAYEL (FR); VERSAEVEL, Marc, 77550 MOISSY CRAMAYEL (FR); VALLEROY, Laurent Georges, 77550 MOISSY CRAMAYEL (FR)
(74) Mandataire: Germain Maureau
(86) Numéro de dépôt international: PCT/EP2020/060989
(87) Numéro de publication internationale: WO 2020/216712

(56) Documents cités:
- WO-A2-2014/197053
- FR-A1- 3 044 053
- US-A1- 2015 226 231

## Description

La présente invention se rapporte à une entrée d'air de nacelle de turbomachine telle qu'un turboréacteur ou un turbopropulseur d'avion.

Un avion est propulsé par un ou plusieurs ensembles propulsifs comprenant chacun un turboréacteur/turbopropulseur logé dans une nacelle tubulaire. Chaque ensemble propulsif est rattaché à l'avion par un mât situé généralement sous une aile ou au niveau du fuselage.

Une nacelle présente généralement une structure comprenant une section amont formant une entrée d'air en amont du moteur, une section médiane destinée à entourer une soufflante du turboréacteur, une section aval pouvant abriter des moyens d'inversion de poussée et destinée à entourer la chambre de combustion du turboréacteur, et est généralement terminée par une tuyère d'éjection dont la sortie est située en aval du turboréacteur.

L'entrée d'air sert à optimiser la captation d'air nécessaire à l'alimentation de la soufflante du turboréacteur dans toute l'enveloppe de vol et à canaliser l'air vers la soufflante.

L'entrée d'air comprend principalement une lèvre d'entrée d'air formant un bord d'attaque, rapportée sur une structure annulaire.

La structure annulaire comprend un carénage externe assurant la continuité aérodynamique externe de la nacelle et un carénage interne assurant la continuité aérodynamique interne de la nacelle, notamment avec le carter externe de soufflante au niveau de la section médiane. La lèvre d'entrée d'air assure en amont la jonction entre ces deux carénages.

Le carénage interne de l'entrée d'air est exposé à un flux d'air important et est situé à proximité des pâles de la soufflante. Il contribue de ce fait à la transmission du bruit provenant du turboréacteur vers l'extérieur de l'aéronef.

Aussi, il est connu de l'art antérieur d'équiper le carénage interne de l'entrée d'air de la nacelle d'un panneau acoustique en vue d'atténuer la transmission du bruit généré par le turboréacteur.

Typiquement, le panneau acoustique comporte une peau acoustique perforée et une âme alvéolaire qui est assemblée sur la peau acoustique.

L'âme alvéolaire comporte une pluralité de cellules acoustiques, formant résonateurs de Helmholtz, qui sont séparées entre elles par des cloisons périphériques.

La peau perforée est tournée vers la zone d'émission de bruit, de sorte que les ondes acoustiques peuvent pénétrer par les ouvertures de la peau perforée à l'intérieur des cellules acoustiques. L'énergie acoustique est dissipée par effet visco-thermique dans les cellules acoustiques.

L'âme alvéolaire du panneau acoustique peut comporter une seule épaisseur de cellules, ou deux épaisseurs séparées par une septum micro-perforé pour améliorer les performances acoustiques du panneau.

Outre leur fonction d'atténuation acoustique, ces panneaux assurent deux autres fonctions :
- une fonction aérodynamique : la peau perforée, en contact avec les flux d'air et de gaz circulant à travers le turboréacteur et la nacelle canalise le flux et doit perturber le moins possibles ces écoulements;
- une fonction structurale de reprise d'efforts : le panneau acoustique est à même de prendre certains des efforts subis par la nacelle.

Une telle entrée d'air représentative est connue du document WO 2014/197053 A2. De plus, les documents US 2015/0226231 A1 et FR 3 044 053 A1 divulguent des entrées d'air avec des panneaux acoustiques amovibles.

Un inconvénient des panneaux acoustiques de l'art antérieur réside dans la difficulté de leur maintenance et de leur réparation en cas, par exemple, d'endommagements liés à des impacts d'oiseaux, d'absorption de corps étrangers etc.

Un autre inconvénient réside dans les pertes aérodynamiques pouvant être engendrées par les perforations de la peau acoustique souvent mal réalisées qui viennent perturber le bon fonctionnement de l'entrée d'air et qui se traduisent par une baisse des performances moteur. Afin de limiter ces pertes aérodynamiques, on cherche à réduire au maximum la section de ces perforations.

Un autre inconvénient réside dans la surface de traitement des panneaux acoustiques qui n'est pas utilisée de manière optimale par rapport à la surface disponible de l'entrée d'air, les panneaux acoustiques étant généralement renforcés par des renforts structuraux pour répondre au besoin de passage d'effort dans lesquels une perforation acoustique est peu efficace voire impossible.

Un autre inconvénient réside dans les coûts de fabrication de ces panneaux acoustiques, en particulier ceux formés de deux épaisseurs de cellules qui nécessitent des étapes de fabrication supplémentaires et une production plus onéreuse.

Un autre inconvénient réside dans la difficulté de dépose d'aubes de soufflantes dans les architectures d'entrées d'air dites courtes qui présentent une géométrie générale tronconique. Cette architecture est optimale d'un point de vue aérodynamique mais rend la dépose d'aube complexe puisqu'un déplacement en translation axiale d'une aube de soufflante vers la lèvre d'entrée d'air entraine une interférence avec l'entrée d'air.

L'invention a notamment pour but de pallier au moins l'un de ces inconvénients et concerne selon un premier aspect une entrée d'air de nacelle de turboréacteur comprenant une structure annulaire comportant un carénage externe définissant une surface aérodynamique externe et un carénage interne définissant une surface aérodynamique interne, lesdits carénages externe et interne étant reliés en amont par une lèvre d'entrée d'air formant un bord d'attaque, ledit carénage interne comprenant une peau externe fixée à la lèvre d'entrée d'air au moyen d'une bride de fixation amont , ladite peau externe étant destinée à être fixée à un carter externe de soufflante au moyen d'une bride de fixation aval, l'entrée d'air comprenant au moins un panneau acoustique indépendant rapporté à la peau externe et comprenant une peau acoustique perforée et une âme alvéolaire .

L'invention concerne selon un autre aspect une entrée d'air de nacelle de turboréacteur comprenant une structure annulaire comportant un carénage externe définissant une surface aérodynamique externe et un carénage interne définissant une surface aérodynamique interne, lesdits carénages externe et interne étant reliés en amont par une lèvre d'entrée d'air formant un bord d'attaque, ledit carénage interne comprenant une peau externe fixée à la lèvre d'entrée d'air au moyen d'une bride de fixation amont, ladite peau externe étant destinée à être fixée à un carter externe de soufflante au moyen d'une bride de fixation aval, l'entrée d'air comprenant au moins un deux panneaux acoustiques indépendants rapportés à la peau externe et comprenant une peau acoustique perforée et une âme alvéolaire, lesdits au moins deux panneaux acoustiques étant adjacents et reliés entre eux par chevauchement. On entend par chevauchement qu'au moins l'un des panneaux se superpose en partie à l'autre. Cette caractéristique permet de faciliter l'assemblage des panneaux acoustiques, et ainsi la fabrication de l'entrée d'air.

On entend par l'expression « relié » que des éléments mécaniques sont de continuité de matière entre eux ou que des éléments mécaniques sont assemblés entre eux par tous moyens de fixation adaptés, tels que des vis, rivets, un soudage, un collage.

Par panneau acoustique indépendant rapporté, on entend un panneau acoustique fabriqué séparément de l'entrée d'air et qui est assemblé par la suite sur la peau externe de l'entrée d'air, les opérations de maintenance et de réparation des panneaux acoustiques sont simplifiées.

Le panneau acoustique diffère ainsi de celui de l'art antérieur en ce qu'il est non structural.

Par panneau acoustique non structural on entend un panneau acoustique qui présente une raideur significativement plus faible que celle du carénage interne de l'entrée d'air auquel il est assemblé de sorte à limiter les efforts qu'il transite.

Par ailleurs, le panneau acoustique rapporté permet d'optimiser et de contrôler la réalisation des perforations dans la peau acoustique du panneau avant son assemblage sur l'entrée d'air et de réaliser ainsi des perforations de très faible section de manière à limiter les pertes aérodynamiques et à améliorer le fonctionnement acoustique. Ceci permet également d'utiliser de nouveaux matériaux pour la réalisation de ces panneaux acoustiques non structuraux.

Selon d'autres caractéristiques de l'invention, l'entrée d'air de l'invention comporte l'une ou plusieurs des caractéristiques optionnelles suivantes considérées seules ou selon toutes les combinaisons possibles.

Selon une caractéristique, la bride de fixation amont est venue de matière avec la peau externe. Ceci permet de réduire les coûts de production de l'entrée d'air et d'en réduire la masse.

Selon une caractéristique, la bride de fixation amont forme un angle de l'ordre de 90° avec la peau externe.

Selon un mode de réalisation, la peau externe est en matériau composite.

Selon un mode de réalisation, le panneau acoustique est rapporté de manière amovible à la peau externe.

Selon un mode de réalisation, le panneau acoustique est en matériau métallique. Selon un mode de réalisation, l'âme alvéolaire est fixée à la peau acoustique perforée par brasage.

Selon un mode de réalisation non couvert par le texte des revendications, l'entrée d'air comprend au moins deux panneaux acoustiques adjacents, rapportés à la peau externe et reliés entre eux par juxtaposition. Selon un mode de réalisation, l'entrée d'air comprend au moins deux panneaux acoustiques adjacents, rapportés à la peau externe et reliés entre eux par chevauchement.

Selon un mode de réalisation, au moins un des panneaux acoustiques comprend une bande de chevauchement conçue pour venir en superposition du panneau acoustique adjacent.

Avantageusement, l'entrée d'air comprend au moins une trappe mobile agencée au niveau de la structure annulaire.

La trappe est mobile entre une position fermée dans laquelle la trappe affleure le carénage externe de la structure annulaire et une position ouverte dans laquelle la trappe ouvre l'accès au panneau acoustique. Les trappes mobiles sont par exemple des trappes coulissantes ou pivotantes ou des trappes aptes à être retirées de la structure annulaire de l'entrée d'air.

Selon un autre aspect, l'invention se rapporte à une nacelle comprenant une entrée d'air telle que décrit précédemment.

Selon un autre aspect, l'invention a pour objet un ensemble de motorisation comprenant une entrée d'air telle que décrite précédemment et une soufflante comprenant une pluralité d'aubes de soufflante, dans lequel la peau externe de l'entrée d'air sur laquelle est rapporté ledit au moins un panneau acoustique présente une forme divergente depuis la lèvre d'entrée d'air jusqu'aux aubes de soufflante et en ce que l'ensemble de motorisation présente un dégagement radial entre la peau externe et les aubes de soufflante formé par un retrait d'au moins un panneau acoustique. Selon un autre aspect, l'invention a pour objet un procédé de dépose d'une aube de soufflante d'un ensemble de motorisation comprenant une entrée d'air telle que décrit précédemment et une pluralité d'aubes de soufflante, le procédé comprenant des étapes de :
- Dépose d'au moins un panneau acoustique indépendant rapporté de la peau externe pour former un dégagement radial;
- Translation des aubes de soufflante à déposer suivant un déplacement axial en direction de la lèvre d'entrée d'air permis par le dégagement radial.

Selon un mode de réalisation, le procédé comprend une étape de mise en rotation de la soufflante de manière à positionner une aube de soufflante à déposer en regard du panneau acoustique déposé.

Selon un mode de réalisation, le panneau acoustique est rapporté à la peau externe au moyen de brides de fixation et le procédé comprend une étape de retrait d'une trappe mobile d'une structure annulaire pour accéder aux brides de fixation du panneau acoustique.

D'autres caractéristiques et avantages de l'invention apparaîtront à la lecture de la description nullement limitative qui suit et des figures annexées qui illustrent de manière schématique plusieurs modes de réalisation d'une entrée d'air de nacelle selon l'invention.
[Fig. 1] est une représentation schématique en section longitudinale d'une entrée d'air de nacelle selon l'invention.
[Fig. 2] est une représentation schématique en section longitudinale de l'entrée d'air de nacelle selon l'invention.
[Fig. 3] est une représentation schématique en coupe transversale d'une vue partielle de l'entrée d'air comprenant plusieurs panneaux acoustiques.
[Fig. 4] est une vue agrandie des panneaux acoustiques non couverts par le texte des revendications.
[Fig. 5] est une vue agrandie des panneaux acoustiques selon l'invention.
[Fig. 6] est une représentation d'une entrée d'air de nacelle selon l'art antérieur.
[Fig. 7] est une représentation schématique d'une dépose d'une aube de soufflante selon l'invention.
[Fig. 8] est une représentation schématique d'une dépose d'une aube de soufflante selon l'invention.
[Fig. 9] est une représentation schématique d'une entrée d'air selon une caractéristique de l'invention.
[Fig. 10] est une représentation schématique d'une entrée d'air selon une caractéristique de l'invention.
[Fig. 11] est une représentation schématique en section longitudinale d'une entrée d'air de nacelle selon une caractéristique de l'invention.

Par souci de simplification, les éléments identiques sont repérés par des signes de référence identiques sur l'ensemble des figures.

Les expressions « amont » et « avant » seront utilisées indifféremment l'une de l'autre pour désigner l'amont de l'entrée d'air et l'expression « aval » et « arrière » seront utilisées indifféremment l'une de l'autre pour désigner l'aval de l'entrée d'air.

Les expressions « amont » et « aval » se réfèrent au sens de l'écoulement d'air entrant et sortant d'une nacelle.

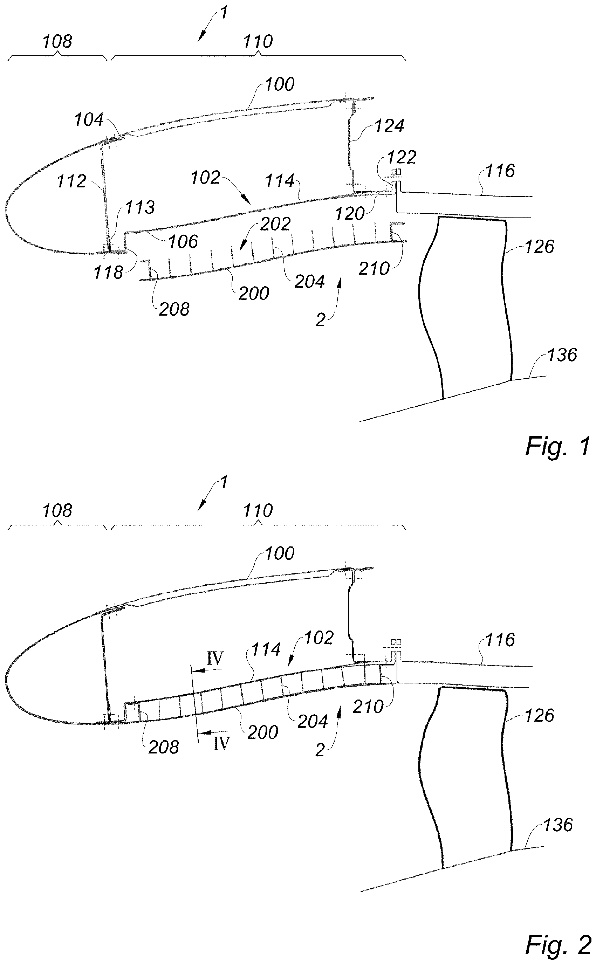

La figure 1 représente une entrée d'air 1 de nacelle de turbomachine. L'entrée d'air comprend une lèvre d'entrée d'air 108 et une structure annulaire 110. La structure annulaire 110 comprend un carénage externe 100 définissant une surface aérodynamique externe et un carénage interne 102 définissant une surface aérodynamique interne. Le carénage externe 100 et le carénage interne 102 sont reliés à leur extrémités amont 104, 106, par la lèvre d'entrée d'air 108 formant un bord d'attaque. La lèvre d'entrée d'air 108 assure la jonction entre les deux carénages 100, 102 et peut notamment être intégrée au carénage externe 100 de l'entrée d'air 1. La lèvre d'entrée d'air 108 est délimitée par une cloison 112 dite « cloison avant » qui forme un volume de forme annulaire de section en forme de « D ». La cloison est réalisée de préférence en titane et est fixée à la lèvre d'entrée d'air par une bride de fixation 113 présentant une forme en L. De préférence, la bride de fixation 113 est réalisée en titane également.

Le carénage interne 102 de l'entrée d'air 1 comprend une peau externe 114. La peau externe 114 s'étend depuis un carter externe de soufflante 116 jusqu'à la lèvre d'entrée d'air 108. Le carter externe de soufflante 116 entoure une soufflante 136 comprenant des aubes de soufflante 126. Dans le présent exemple, une seule aube de soufflante est représentée.

De manière connue en soi, la soufflante 136 est conçue pour être mise en rotation. La mise en rotation de la soufflante 136 entraine les aubes de soufflante 126 qui compressent l'air entrant dans le turboréacteur.

La peau externe 114 est fixée à son extrémité amont 106 à la lèvre d'entrée d'air 108 au moyen d'une bride de fixation amont 118 et est fixée à son extrémité aval 120 au carter de soufflante 116 au moyen d'une bride de fixation 122 aval. L'extrémité aval 120 de la peau externe 114 peut être reliée à la périphérie interne d'une cloison annulaire transversale 124 de renfort et de transmission d'efforts, dite « cloison arrière », dont la périphérie externe est reliée au carénage externe 100 de l'entrée d'air 1.

La peau externe 114 assure ainsi la transmission des efforts depuis la lèvre d'entrée d'air 108 jusqu'au carter de soufflante 116. La peau externe 114 est structurale.

La bride de fixation 118 amont peut être venue de matière avec la peau externe 114. Par venue de matière on entend que la bride de fixation amont 118 et la peau externe 114 sont formées en une seule pièce. De préférence, la bride de fixation et la peau externe sont réalisées en matière composite telles qu'en fibres sèches infusées dans une résine thermoplastique. La bride de fixation 118 amont et la peau externe 114 peuvent être réalisées par conformage. Le conformage comprend des étapes de mise en place de la matière à déformer sur un premier outillage et de déformation de la matière au moyen d'un deuxième outillage présentant la forme finale désirée. Ce procédé permet en outre de former un angle compris entre 80° et 100° entre la bride de fixation 118 amont et la peau externe, de préférence la bride de fixation 118 amont forme un angle de 90° avec la peau externe 114.

L'entrée d'air 1 comprend un panneau acoustique 2 indépendant. Le panneau acoustique 2 comprend une peau acoustique 200 perforée. La peau acoustique 200 perforée comprend une pluralité de trous (non visibles) formés de manière régulière dans la peau acoustique 200.

Le panneau acoustique 2 comprend également une âme alvéolaire 202 comportant une pluralité de cellules acoustiques qui sont séparées entre elles par des cloisons périphériques 204.

La figure 2 représente l'entrée d'air 1 de nacelle de turbomachine dans laquelle le panneau acoustique 2 est rapporté à la peau externe 114.

Le panneau acoustique 2 est rapporté à la peau externe 114 au moyen de deux brides de fixation 208, 210. Par panneau acoustique rapporté, on entend un panneau fabriqué séparément de la peau externe 114 de l'entrée d'air 1 et qui est assemblé par la suite sur cette peau externe 114.

Le panneau acoustique 2 peut être fixé de manière amovible sur la peau externe 114 pour faciliter son remplacement en cas de détérioration.

Le panneau acoustique 2 s'étend le long de la peau externe 114 depuis la lèvre d'entrée d'air 108 jusqu'au carter de soufflante 116. Le panneau acoustique 2 est ainsi disposé en amont d'aubes de soufflantes 126.

Ainsi, les fonctions structurales et acoustiques sont dissociées. La fonction structurale permettant la transmission d'efforts est assurée par la peau externe 114 du carénage interne qui s'étend depuis la lèvre d'entrée d'air 108 jusqu'au carter de soufflante 116. La fonction de traitement acoustique est assurée par le panneau acoustique 2 rapporté à la peau externe 114 au moyen des brides de fixation 208, 210. Grâce à la fabrication du panneau acoustique indépendante de la fabrication de l'entrée d'air, la réalisation du panneau acoustique n'est pas soumise aux contraintes de fabrication de cette entrée d'air (notamment aux contraintes de pression et de température).

Ainsi le panneau acoustique 2 peut être réalisé en matériau métallique et/ou en matériau composite. Dans un mode de réalisation, la peau acoustique et l'âme alvéolaire peuvent être toutes deux réalisées en matériau métallique. De préférence, la peau acoustique et l'âme alvéolaire sont réalisées en aluminium, encore plus préférentiellement, la peau acoustique et l'âme alvéolaire sont réalisées en un alliage d'aluminium choisi dans la série 6000. L'âme alvéolaire métallique est fixée à la peau acoustique métallique par brasage. La peau acoustique métallique est percée par une technique de micro-perçage réalisée par laser.

L'utilisation de ces différents matériaux est rendue possible grâce à la séparation des fonctions acoustiques et structurales.

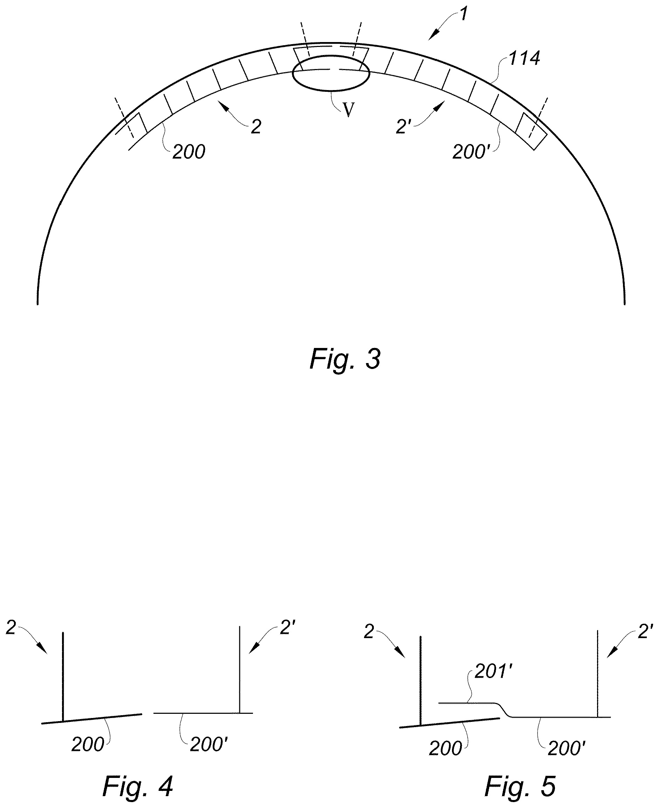

La figure 3 est une vue partielle de l'entrée d'air en coupe transversale selon le plan IV-IV de la figure 2. Cette figure montre deux panneaux acoustiques 2, 2' indépendants comprenant respectivement une peau perforée 200, 200', rapportés à la peau externe 114 et fixés sur celle-ci au moyen de brides de fixation (non visibles).

Bien que l'exemple de la figure 3 montre une entrée d'air comprenant deux panneaux acoustiques rapportés à la peau externe, il est prévu de rapporter d'autres panneaux acoustiques pour recouvrir la totalité de la circonférence de l'entrée d'air de la nacelle. Les figures 4 et 5 sont des vues agrandies de la section V de la figure 3 qui illustrent des variantes de l'entrée d'air illustrée à la figure 3.

En référence à la figure 4, non couverte par le texte des revendications, les deux panneaux acoustiques 2, 2' sont adjacents et reliés l'un à l'autre par juxtaposition, c'est-à-dire bord à bord. Selon la variante de réalisation de l'invention illustrée à la figure 5, les panneaux acoustiques 2, 2' sont adjacents et reliés l'un à l'autre par chevauchement.

Dans cette variante de réalisation, une bande de chevauchement 201' de la peau acoustique perforée 200' du premier panneau acoustique 2' est conçue pour venir en superposition de la peau acoustique perforée 200 du panneau acoustique adjacent.

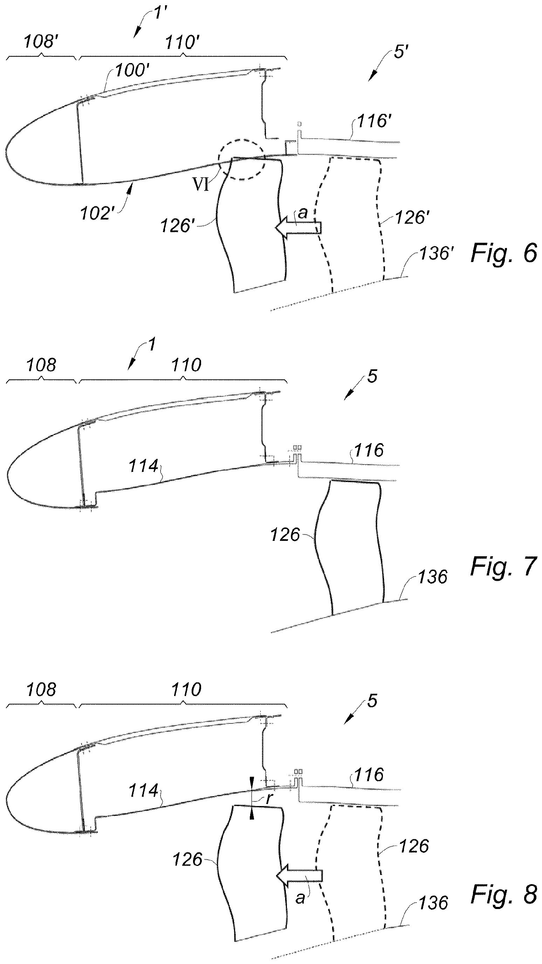

La figure 6 est une illustration d'un ensemble de motorisation 5' de l'art antérieur sur laquelle on peut voir une dépose d'aube de soufflante 126'. L'ensemble de motorisation 5' comprend une entrée d'air 1' de nacelle, un carter de soufflante 116' entourant une soufflante 136' comportant une aube de soufflante 126'. La dépose des aubes de soufflante peut être effectuée pour l'entretien ou la réparation des aubes de soufflantes.

L'entrée d'air 1' comprend une lèvre d'entrée d'air 108' et une structure annulaire 110'. La structure annulaire 110' comprend un carénage externe 100' définissant une surface aérodynamique externe et un carénage interne 102' définissant une surface aérodynamique interne. L'entrée d'air 1' de la nacelle présente une forme sensiblement tronconique.

Le déplacement en translation axiale suivant la direction de la flèche (a) vers la lèvre d'entrée d'air 108' de l'aube de soufflante 126' entraine une interférence (représenté en section VI) de l'aube 126' avec l'entrée d'air. Cette problématique est particulièrement rencontrée avec les nacelles courtes connues de l'art antérieur, qui convergent en direction de la lèvre d'entrée d'air.

Les figures 7 et 8 illustrent la dépose d'une aube de soufflante 126 d'un ensemble de motorisation 5 selon une forme de réalisation de l'invention dans lequel au moins un panneau acoustique rapporté a été retiré. Dans le présent exemple un seul panneau acoustique 2 a été retiré. L'ensemble de motorisation 5 présente une entrée d'air 1 de nacelle comportant une lèvre d'entrée d'air 108 et une structure annulaire 110, un carter externe de soufflante 116 entourant une soufflante 136 comportant une aube de soufflante 126. La figure 8 représente plus particulièrement le déplacement de l'aube de soufflante 126 à déposer en translation axiale suivant la direction de la flèche (a) vers la lèvre d'entrée d'air 108.

L'entrée d'air de la nacelle présentant une forme sensiblement tronconique, la peau externe 114 de l'entrée d'air présente de ce fait une forme divergente depuis la lèvre d'entrée d'air 108 jusqu'à l'aube de soufflante 126.

Le retrait du panneau acoustique 2 rapporté permet de former un dégagement radial (r) entre la peau externe 114 et l'aube de soufflante 126 de telle sorte que l'aube de soufflante 126 n'entre pas en contact avec l'entrée d'air 1 lors de son déplacement en translation axiale.

Au moins un panneau acoustique 2 indépendant est déposé de la peau externe 114 pour former un dégagement radial (r). La soufflante comprenant les aubes de soufflante est mise en rotation, par exemple manuellement, de manière à positionner l'aube de soufflante à déposer en regard du ou des panneaux qui ont été déposés puis l'aube de soufflante 126 est déplacée en translation suivant un déplacement axial (a) en direction de la lèvre d'entrée d'air 108 permis par le dégagement radial (r). L'aube de soufflante 126 n'interfère pas avec l'entrée d'air 1 lors de son déplacement en translation axiale.

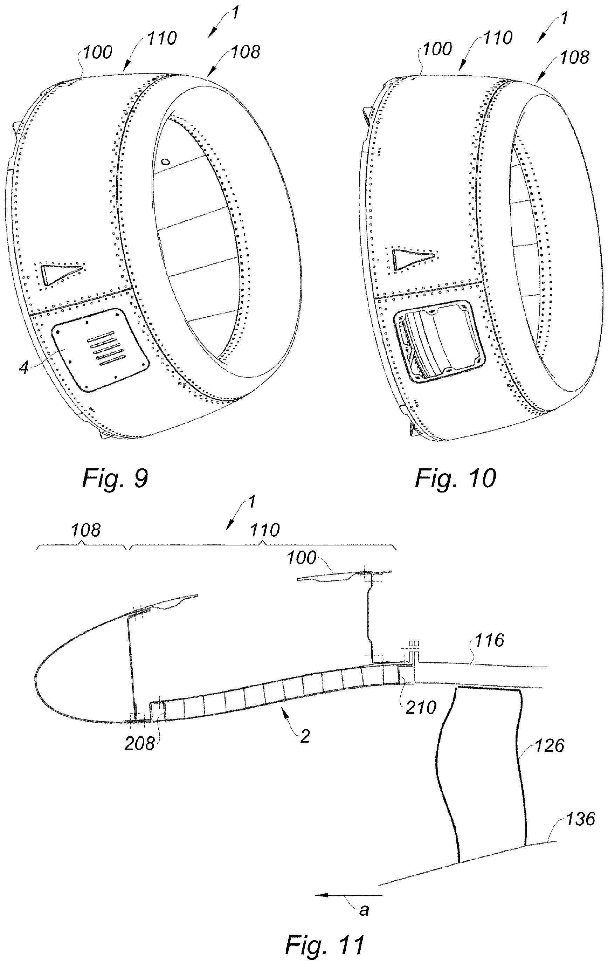

La figure 9 représente une entrée d'air 1 comprenant une lèvre d'entrée d'air 108 et une structure annulaire 110 comportant un carénage externe 100. La structure annulaire 110 comporte une trappe 4, mobile entre une position fermée dans laquelle la trappe affleure le carénage externe 100 et une position ouverte dans laquelle la trappe ouvre l'accès au panneau acoustique 2. La trappe est apte à être complètement retirée du carénage externe 100 (figure 10). Le retrait de la trappe mobile permet d'accéder au panneau acoustique sans avoir à déposer le carénage externe de la lèvre d'entrée d'air.

Avantageusement, la trappe peut également servir à donner accès à d'autres éléments qui pourraient être présents dans l'entrée d'air tels que des éléments d'un système de dégivrage ou des sondes nécessaires au contrôle moteur.

La figure 11 représente l'entrée d'air 1 de nacelle de turbomachine dans laquelle la trappe 4 a été retirée de la structure annulaire pour permettre l'accès aux brides de fixation 208, 210 du panneau acoustique 2. La trappe 4 est retirée du carénage externe 100 de la structure annulaire 110 pour permettre l'accès aux brides de fixation 208, 210 d'un panneau acoustique 2 à retirer. Le panneau acoustique 2 est déposé. La soufflante 136 comprenant les aubes de soufflante est mise en rotation de manière à positionner l'aube de soufflante à déposer en regard du panneau acoustique déposé. L'aube de soufflante 126 à déposer est déplacée par translation axiale suivant la direction de la flèche (a) en direction de la lèvre d'entrée d'air 108 permis par le dégagement radial (r) (figure 8). Grâce à la dépose du panneau acoustique 2, l'aube de soufflante 126 n'entre pas en contact avec l'entrée d'air lors de sa dépose.

La présente description de l'invention est donnée à titre d'exemple non limitatif.

Ainsi grâce à l'entrée d'air selon l'invention dans laquelle le panneau acoustique est rapporté et non structural, les opérations de maintenance et de réparation sont simplifiées. De plus il est possible de contrôler de manière optimale la réalisation des perforations dans la peau acoustique de sorte à limiter les pertes aérodynamiques. Enfin il permet de répondre à la problématique de dépose d'aubes de soufflante de l'art antérieur.

## Revendications

1. Entrée d'air (1) de nacelle de turboréacteur comprenant une structure annulaire (110) comportant un carénage externe (100) définissant une surface aérodynamique externe et un carénage interne (102) définissant une surface aérodynamique interne, lesdits carénages externe (100) et interne (102) étant reliés en amont par une lèvre d'entrée d'air (108) formant un bord d'attaque, ledit carénage interne (102) comprenant une peau externe (114) fixée à la lèvre d'entrée d'air (108) au moyen d'une bride de fixation amont (118), ladite peau externe (114) étant destinée à être fixée à un carter externe de soufflante (116) au moyen d'une bride de fixation aval (122), l'entrée d'air (1) comprenant au moins deux panneaux acoustiques (2, 2') indépendants rapportés à la peau externe (114) et comprenant une peau acoustique perforée (200) et une âme alvéolaire (202), lesdits au moins deux panneaux acoustiques (2, 2') étant adjacents, **caractérisée en ce que** lesdits au moins deux panneaux acoustiques (2, 2') adjacents sont reliés entre eux par chevauchement.

2. Entrée d'air de nacelle selon la revendication 1 **caractérisée en ce que** la bride de fixation amont (118) est venue de matière avec la peau externe (114).

3. Entrée d'air de nacelle selon l'une des revendications précédentes dans laquelle la bride de fixation amont (118) forme un angle de l'ordre de 90° avec la peau externe (114).

4. Entrée d'air de nacelle selon l'une des revendications précédentes **caractérisée en ce que** la peau externe (114) est en matériau composite.

5. Entrée d'air de nacelle selon l'une des revendications précédentes **caractérisée en ce que** lesdits au moins deux panneaux acoustiques (2, 2') sont rapportés de manière amovible à la peau externe (114).

6. Entrée d'air de nacelle selon l'une des revendications 1 à 5 **caractérisée en ce que** Z lesdits au moins deux panneaux acoustiques (2, 2') sont en matériau métallique.

7. Entrée d'air de nacelle selon la revendication 6 **caractérisée en ce que** l'âme alvéolaire (202) est fixée à la peau acoustique perforée (200) par brasage.

8. Entrée d'air de nacelle selon la revendication 1 **caractérisée en ce que** au moins un des panneaux acoustiques comprend une bande de chevauchement (201') conçue pour venir en superposition du panneau acoustique adjacent.

9. Entrée d'air de nacelle selon l'une des revendications précédentes **caractérisée en ce qu'**au moins une trappe (4) mobile est agencée au niveau de la structure annulaire (110).

10. Ensemble de motorisation (5) comprenant une entrée d'air (1) selon l'une des revendication 1 à 9 et une soufflante (136) comprenant une pluralité d'aubes de soufflante (126) **caractérisé en ce que** la peau externe (114) de l'entrée d'air sur laquelle sont rapportés lesdits au moins deux panneaux acoustiques (2, 2') présente une forme divergente depuis la lèvre d'entrée d'air (108) jusqu'aux aubes de soufflante (126) et **en ce que** l'ensemble de motorisation (5) présente un dégagement radial (r) entre la peau externe (114) et les aubes de soufflante (126) formé par un retrait d'au moins un panneau acoustique (2).

11. Procédé de dépose d'une aube de soufflante d'un ensemble de motorisation (5) selon la revendication 10, le procédé comprenant des étapes de :
- Dépose d'au moins un panneau acoustique (2) indépendant rapporté de la peau externe (114) pour former un dégagement radial (r);
- Translation d'une aube de soufflante à déposer suivant un déplacement axial (a) en direction de la lèvre d'entrée d'air (108) permis par le dégagement radial (r).

12. Procédé de dépose d'aube de soufflante selon la revendication 11 **caractérisé en ce qu'**il comprend une étape de mise en rotation de la soufflante de manière à positionner une aube de soufflante à déposer en regard du panneau acoustique déposé.

13. Procédé de dépose d'aubes de soufflante selon l'une des revendications 11 ou 12 caractérisé en que le panneau acoustique (2) est rapporté à la peau externe (114) au moyen de brides de fixation (208, 210) et en ce que le procédé comprend une étape de retrait d'une trappe (4) mobile d'une structure annulaire (110) pour accéder aux brides de fixation (208, 210) du panneau acoustique (2).

## Patentansprüche

1. Lufteinlass (1) einer Gondel eines Turbotriebwerks, umfassend eine umlaufende Struktur (110), welche eine Außenverkleidung (100), welche eine aerodynamische Außenoberfläche definiert, und eine Innenverkleidung (102) beinhaltet, welche eine aerodynamische Innenoberfläche definiert, wobei die Außen- (100) und Innenverkleidung (102) stromaufwärts durch eine Lufteinlasslippe (108) verbunden sind, welche eine Vorderkante bildet, wobei die Innenverkleidung (102) eine Außenhaut (114) umfasst, welche anhand eines stromaufwärts gelegenen Befestigungsflansches (118) an der Lufteinlasslippe (108) befestigt ist, wobei die Außenhaut (114) dazu bestimmt ist, anhand eines stromabwärts gelegenen Befestigungsflansches (122) an einem Außengebläsegehäuse (116) befestigt zu werden, wobei der Lufteinlass (1) mindestens zwei unabhängige Akustikplatten (2, 2') umfasst, welche an der Außenhaut (114) beigebracht sind, und eine gelochte Akustikhaut (200) und einen wabenförmigen Kern (202) umfassen, wobei die mindestens zwei Akustikplatten (2, 2') aneinander angrenzend sind, **dadurch gekennzeichnet, dass** die mindestens zwei aneinander angrenzenden Akustikplatten (2, 2') durch Überlappen miteinander verbunden sind.

2. Lufteinlass einer Gondel nach Anspruch 1, **dadurch gekennzeichnet, dass** der stromaufwärts gelegene Befestigungsflansch (118) in einem Stück mit der Außenhaut (114) ist.

3. Lufteinlass einer Gondel nach einem der vorstehenden Ansprüche, wobei der stromaufwärts gelegene Befestigungsflansch (118) einen Winkel in der Größenordnung von 90° mit der Außenhaut (114) bildet.

4. Lufteinlass einer Gondel nach einem der vorstehenden Ansprüche, **dadurch gekennzeichnet, dass** die Außenhaut (114) aus einem Verbundwerkstoff ist.

5. Lufteinlass einer Gondel nach einem der vorstehenden Ansprüche, **dadurch gekennzeichnet, dass** die mindestens zwei Akustikplatten (2, 2') in abnehmbarer Form an der Außenhaut (114) beigebracht sind.

6. Lufteinlass einer Gondel nach einem der Ansprüche 1 bis 5, **dadurch gekennzeichnet, dass** die mindestens zwei Akustikplatten (2, 2') aus Metallwerkstoff sind.

7. Lufteinlass einer Gondel nach Anspruch 6, **dadurch gekennzeichnet, dass** der wabenförmige Kern (202) durch Löten an der gelochten Akustikhaut (200) befestigt ist.

8. Lufteinlass einer Gondel nach Anspruch 1, **dadurch gekennzeichnet, dass** mindestens eine der Akustikplatten ein Überlappungsband (201') umfasst, welches gestaltet ist, um über die angrenzende Akustikplatte überlappt zu werden.

9. Lufteinlass einer Gondel nach einem der vorstehenden Ansprüche, **dadurch gekennzeichnet, dass** mindestens eine bewegliche Klappe (4) im Bereich der umlaufenden Struktur (110) angeordnet ist.

10. Motorisierungsanordnung (5), umfassend einen Lufteinlass (1) nach einem der Ansprüche 1 bis 9, und ein Gebläse (136), welches eine Vielzahl von Gebläseschaufelblättern (126) umfasst, **dadurch gekennzeichnet, dass** die Außenhaut (114) des Lufteinlasses, auf der die mindestens zwei Akustikplatten (2, 2') beigebracht sind, eine abweichende Form ab der Lufteinlasslippe (108) bis zu den Gebläseschaufelblättern (126) aufweist, und dadurch, dass die Motorisierungsanordnung (5) einen radialen Freiraum (r) zwischen der Außenhaut (114) und den Gebläseschaufelblättern (126) aufweist, welcher durch eine Aussparung mindestens einer Akustikplatte (2) gebildet wird.

11. Verfahren zum Abnehmen eines Gebläseschaufelblattes einer Motorisierungsanordnung (5) nach Anspruch 10, wobei das Verfahren die Schritte umfasst zum:
- Abnehmen mindestens einer beigebrachten unabhängigen Akustikplatte (2) von der Außenhaut (114) zur Bildung eines radialen Freiraums (r);
- Verschieben eines abzunehmenden Gebläseschaufelblattes gemäß einer axialen Bewegung (a) in Richtung der Lufteinlasslippe (108), was durch den radialen Freiraum (r) ermöglicht wird.

12. Verfahren zum Abnehmen eines Gebläseschaufelblattes nach Anspruch 11, **dadurch gekennzeichnet, dass** es einen Schritt zum in Drehung versetzen des Gebläses derart umfasst, um ein abzunehmendes Gebläseschaufelblatt gegenüber der abgenommenen Akustikplatte zu positionieren.

13. Verfahren zum Abnehmen von Gebläseschaufelblättern nach den Ansprüchen 11 oder 12, **dadurch gekennzeichnet, dass** die Akustikplatte (2) anhand von Befestigungsflanschen (208, 210) an der Außenhaut (114) beigebracht ist, und dadurch, dass das Verfahren einen Schritt zum Entfernen einer beweglichen Klappe (4) einer umlaufenden Struktur (110) umfasst, um zu den Befestigungsflanschen (208, 210) der Akustikplatte (2) zu gelangen.

## Claims

1. An air intake (1) of a turbojet engine nacelle comprising an annular structure (110) including an outer fairing (100) defining an outer aerodynamic surface and an inner fairing (102) defining an inner aerodynamic surface, said outer (100) and inner (102) fairings being connected upstream by an air intake lip (108) forming a leading edge, said inner fairing (102) comprising an outer skin (114) fastened to the air intake lip (108) by means of an upstream fastening flange (118), said outer skin (114) being intended to be fastened to a fan outer casing (116) by means of a downstream fastening flange (122), the air intake (1) comprising at least two independent acoustic panels (2, 2') attached to the outer skin (114) and comprising a perforated acoustic skin (200) and a cellular core (202), said at least two acoustic panels (2, 2') being adjacent, **characterized in that** said at least two adjacent acoustic panels (2, 2')are connected together by overlapping.

2. The nacelle air intake according to claim 1, **characterized in that** the upstream fastening flange (118) is integral with the outer skin (114).

3. The nacelle air intake according to any of the preceding claims, wherein the upstream fastening flange (118) forms an angle in the range of 90° with the outer skin (114).

4. The nacelle air intake according to any of the preceding claims, **characterized in that** the outer skin (114) is made of a composite material.

5. The nacelle air intake according to any of the preceding claims, **characterized in that** said at least two acoustic panels (2, 2') are removably attached to the outer skin (114).

6. The nacelle air intake according to any of claims 1 to 5, **characterized in that** said at least two acoustic panels (2, 2') are made of a metallic material.

7. The nacelle air intake according to claim 6, **characterized in that** the cellular core (202) is fastened to the perforated acoustic skin (200) by brazing.

8. The nacelle air intake according to claim 1, **characterized in that** at least one of the acoustic panels comprises an overlapping strip (201') designed so as to be superimposed with the adjacent acoustic panel.

9. The nacelle air intake according to any of the preceding claims, **characterized in that** at least one movable hatch (4) is arranged at the level of the annular structure (110).

10. A propulsion unit (5) comprising an air intake (1) according to any of claims 1 to 9 and a fan (136) comprising a plurality of fan blades (126) **characterized in that** the outer skin (114) of the air intake on which said at least two acoustic panels (2, 2') are attached has a shape diverging from the air intake lip (108) up to the fan blades (126) and **in that** the propulsion unit (5) has a radial clearance (r) between the outer skin (114) and the fan blades (126) formed by a setback of at least one acoustic panel (2).

11. A method for depositing a fan blade of a propulsion unit (5) according to claim 10, the method comprising steps of:
- Deposition of at least one independent acoustic panel (2) attached to the outer skin (114) so as to form a radial clearance (r);
- Translation of a fan blade to be deposited according to an axial displacement (a) in the direction of the air intake lip (108) allowed by the radial clearance (r).

12. The fan blade deposition method according to claim 11, **characterized in that** it comprises a step of rotating the fan so as to position a fan blade to be deposited opposite the deposited acoustic panel.

13. The fan blade deposition method according to any of claims 11 or 12, **characterized in that** the acoustic panel (2) is attached to the outer skin (114) by means of fastening flanges (208, 210) and **in that** the method comprises a step of removing a movable hatch (4) off an annular structure (110) to access the fastening flanges (208, 210) of the acoustic panel (2).
